Europäisches Patentamt

European Patent Office

Office européen des brevets

(11) Veröffentlichungsnummer: **0 299 263**
**A1**

## EUROPÄISCHE PATENTANMELDUNG

(21) Anmeldenummer: 88110202.4

(22) Anmeldetag: 27.06.88

(51) Int. Cl.⁴ **B60V 1/08** , **B60V 1/22**

(30) Priorität: 16.07.87 DE 3723487

(43) Veröffentlichungstag der Anmeldung:
18.01.89 Patentblatt 89/03

(84) Benannte Vertragsstaaten:
**DE ES FR GB GR IT**

(71) Anmelder: **Jörg, Günther W.**
**Odenwaldring 24**
**D-6101 Grossbieberau(DE)**

(72) Erfinder: **Jörg, Günther W.**
**Odenwaldring 24**
**D-6101 Grossbieberau(DE)**

(74) Vertreter: **Schulze, Ilse, Dipl.-Chem.**
**Gaisbergstrasse 3**
**D-6900 Heidelberg(DE)**

(54) Endscheibe für ein Stauflügelboot.

(57) Es wird eine Endscheibe für ein Stauflügelboot beschrieben, das an jeder Rumpfseite zwei im Abstand voneinander und hintereinander in etwa gleicher Höhe angeordnete Tragflügel (7-8) bzw. (7a-8a) in Form von Flügelstummeln aufweist, die durch jeweils eine flache Endscheibe (1) miteinander verbunden sind. Die Endscheibe (1) ist als Hohlkörper mit einem im wesentlichen trapezförmigen Querschnitt gestaltet und besteht aus Obergurt (2), Untergurt (3) und Beplankung (4 und 5). Zur Vervollständigung des statischen Verbandes sind im Hohlraum der Endscheibe (1) im Abstand voneinander Spanten (6) angeordnet, die den Hohlkörper in Kammern (9) teilen.

EP 0 299 263 A1

Fig. 3

# Endscheibe für ein Stauflügelboot

Die Erfindung betrifft eine Endscheibe für ein Stauflügelboot mit an jeder Rumpfseite zwei im Abstand voneinander und hintereinander in etwa gleicher Höhe am Rumpf angeordneten Tragflügel in Form von Flügelstummeln, die miteinander durch eine an der Außenseite der Flügelstummel befestigte flache Endscheibe verbunden sind.

Stauflügelboote dieser Art sind seit einiger Zeit bekannt. Beispielsweise werden in der DE-AS 1 756 013 und der DE-AS 2 303 972 eigenstabile aerodynamische Bodeneffektfahrzeuge nach dem Tandemflügelprinzip beschrieben, bei denen die vordere Tragfläche durch die Stauluft im aerodynamischen Bodeneffekt vorwiegend auftriebsmäßig belastet wird, während die rückwärtige Tragfläche als weniger bodeneffektabhängig flugmechanische Regeleinheit die Schwebehöhe des Fahrzeugs stabilisiert.

Die während der Phase des Flairens (Fliegens) an die Tragflächen von Tenademstauflügelfahrzeugen gestellten Bedingungen machen eine differenzierte Profilgestaltung und Relativanordnung der Flügel nötig. So beschreibt die DE-AS 1 756 013 ein Tandembodeneffektfahrzeug, bei dem die vordere Tragfläche als Parallelflügel mit Endscheiben und die hintere Tragfläche als in Richtung der Fahrzeuglängsachse pfeilförmig auslaufender Deltaflügel ausgebildet ist.

In der DE-AS 2 303 972 sind die Tragflächen als im Abstand von etwa einer halben Profiltiefe angeordnete Parallelflügel ausgeführt, deren Profile entsprechend der vorwiegend tragenden bzw. stabilisierenden Funktion derart gestaltet sind, daß der Vorderflügel auftriebsmäßig vor allem von der Druckseite, der Hinterflügel dagegen hauptsächlich von der Sogseite her belastet ist.

Aus der DE-OS 39 31 020 ist ein Stauflügelboot bekannt, bei dem besonders gestaltete Tragflächen bzw. Tragflügel vorgesehen sind. Diese Flügel sind als in Kammern segmentierte Hohlkörper mit festen oder variablen Zwischen-schotten ausgestaltet. Es sind Flügelstummel, die an beiden Seiten des Bootsrumpfes hintereinander angeordnet sind. Die beidseitigen Außenflächen der vorderen und hinteren Flügelstummel sind durch je eine flache Endscheibe miteinander verbunden, deren Kontur im wesentlichen der durch die Tragflügel bestimmten Linie des Bootes entspricht. Durch solche Endscheiben wird das Überströmen der Luft während des Flairens von der Druckseite zur Sausgeite verhindert bzw. gebremst. Dieser Effekt führt zur Reduzierung des induzierten Widerstandes und erzeugt damit einen wesentlichen Teil des guten Flugwirkungsgrades der Tragflügel in Bodennähe.

Es wurde gefunden, daß sich Stauflügelfahrzeuge nach den genannten Prinzipien und Ausführungsformen in praktischer Erprobung ausgezeichnet bewährt. Während aber in der bisherigen Forschung und Entwicklung von Bodeneffektfahrzeugen naturgemäß die Phase des Flairens im Vordergrund des Interesses stand, blieben Probleme ungelöst, die vor allem die Wendigkeit im Flairen des Kurvenfluges, der Schwimmstabilität, der statischen Stabilität bei rauhem Seegang und der Sicherheit gegenüber mitgeführtem Treibstoff betrafen.

Aufgabe der Erfindung ist es, die Endscheiben so zu gestalten, daß sie zur Verbesserung der Eigenschaften des Stauflügelbootes, und zwar sowohl beim Flairen des Kurbenfluges als auch der Stabilität sowie der Sicherheit beitragen.

Diese Ausgabe wird durch eine Endscheibe der eingangs genannten Art dadurch gelöst, daß jede Endscheibe als Hohlkörper gestaltet ist, der aus Obergurt, Untergurt sowie beidseitiger Beplankung besteht und durch im Innenraum des Hohlraumes im Abstand voneinander angeordneten Spanten verstärkt.

Zweckmäßige Weiterbildungen der erfindungsgemäßen Endscheibe sind in den Unteransprüchen gekennzeichnet.

Die Vorteile einer so gestalteten Endscheibe sind vielfältig und tragen zu erwünschten Eigenschaften eines Stauflügelbootes wesentlich bei. Durch die beiderseits angeordneten flachen Endscheiben, die die vorderen und hinteren Flügelstummel miteinander verbinden und deren Konturen entsprechend gestaltet sind, wird das Überströmen der Luft während des Flairens von der Druckseite, also der Profilunterseite, zu der Saugseite, also der Profiloberseite verhindert bzw. gebremst. Dies führt zur Reduzierung des induzierten Widerstandes und trägt dadurch zu einem beachtlichen Teil des guten Flugwirkungsgrades der Flügel in Bodennähe bei.

Die besondere Ausführung der erfindungsgemäßen Endscheibe erfüllt aber noch weitere wichtige Funktionen. Durch den statischen Verband aus Ober- und Untergurt, Beplankung und Spanten wird das Stauflügelboot auch bei schwerem Seegang seetüchtiger und sicherer. Als Hohlkörper verleiht die Endscheibe dem Fahrzeug durch die Trimaranwirkung mehr Schwimmauftrieb und Schwimmstabilität und damit zusätzliche Sicherheit. Die teilweise oder vollständig wasserichten Bereiche der Endscheibe können abgeschottet als Treibstoffbehälter mit benutzt werden. Sie sind weit weg vom Rumpf der Kabine und dem Motorraum und bieten daher zusätzliche Sicherheit beim Auftanken, bei Leckagen und schließlich auch eine statische Entlastung der Flügelstruktur. Es ist dadurch auch eine bessere Verteilung des Gewichts möglich. Ein weiterer Vorteil der erfindungsgemäß gestalteten Endscheiben besteht darin, daß in die nur teilweise wasserdichten Bereiche Treibstoff-Sacktanks eingebracht werden können. Durch das Aufschwimmen solcher Sacktanks bei Verdrängungsfahrten beispielsweise im Hafen und beim Anlegen, ist garantiert, daß auch die letzten Treibstoffreste gehoben und von den Treibstoffpumpen zum Motor gefördert werden. Die konvergierenden Ober- und Untergurte verleihen dem Stauflügelboot eine Wendigkeit, die sich insbesondere beim Kurvenfliegen günstig auswirkt.

Es wurde gefunden, daß besonders bei einer Winkelstellung von 28 bis 35°, vorzugsweise 30°, des Untergurtes zur Horizontalen ohne Gefahr extrem enge Kurven geflairt werden können, ohne daß das gefürchtete Herumreissen nach den Innenkurven erfolgt. Dies ist vor allem bei rauher See wichtig. Die Konstruktion gestattet ferner ein Anwassern mit Seitenwind, ohne daß zu starke Beschleunigungskräfte hervorgerufen werden. Durch den in Fahrtrichtung leicht ansteigenden Bereich des Untergurtes der beiden Endscheiben am Bug des Bootes werden beim Abwassern verbesserte Gleitbedingungen erreicht und zusätzliche hydrodynamische Auftriebskräfte geschaffen. Auch kann damit ungefährlich auf Grund, beispielsweise Sand und Kies, aufgelaufen werden. Auch beim Anwassern erfolgt durch diese in Bugrichtung ansteigende Unterkante ein langsames kontinuierliches Eintauchen und in Verbindung mit der nach außen verlaufenden Schräge des Untergurtes wird der Übergang von der Luft in die Wasserführung harmonisiert.

Die Erfindung wird anhand eines in den Zeichnungen dargestellten Ausführungsbeispiels näher erläutert. Es zeigen:

Fig. 1 eine schematische perspektivische Unteransicht eines Stauflügelbootes mit Sich auf die in Flugrichtung gesehene linke Endscheibe;

Fig. 2 eine Seitenansicht des Stauflügelbootes mit Sicht auf die Außenseite der linken Endscheibe;

Fig. 3 eine schematische Seitensicht der Endscheibe;

Fig. 4 eine Draufsicht auf die Endscheibe; und

Fig. 5 eine Seitenansicht eines Stegbleches, dessen Kontur dem Querschnitt einer Endscheibe entspricht.

Das dargestellte Fahrzeug ist ein Tandemflügel-Fahrzeug, bei dem an jeder Längsseite des Fahrzeugrumpfes 10 symmetrisch je zwei Tragflächen bildende Tragflügel 7-8 bzw. 7a-8a vorgesehen sind. Die Tragflügel 7 und 8 sowie die Tragflügel 7a und 8a sind im Abstand voneinander und hintereinander in etwa gleicher Höhe angeordnet. Sie sind miteinander durch je eine an ihren Außenseiten befestigte flache Endscheibe 1 verbunden. Die Kontur der Endscheibe 1 entspricht im wesentlichen der durch die Tragflügel 7 und 8 vorgegebenen Linie.

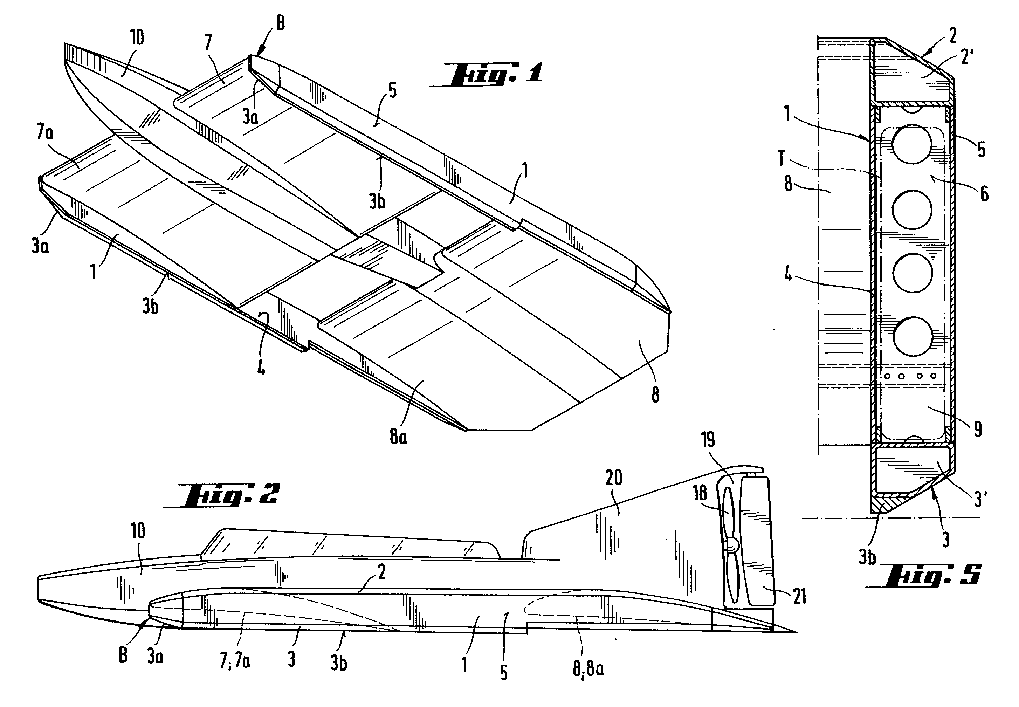

In herkömmlicher Weise weist das Stauflügelboot eine Seitenleitwerksflosse 20 auf und eine Antriebsschraube 18 läuft in einem Spalt 19 zwischen der Seitenleitwerksflosse 20 und einem Seitenruder 21 (Fig. 2).

Wie eingangs dargelegt ist, erfüllen die Endscheiben wichtige Funktionen und ihre Gestaltung ist für die Arbeit des Stauflügelbootes sowie dessen Wirkungsgrad und Sicherheit von Bedeutung.

Die Endscheiben zu beiden Seiten des Fahrzeugs sind symmetrisch ausgebildet und es wird daher nur eine Endscheibe 1 näher beschrieben.

Die Endscheibe 1 ist als Hohlkörper gestaltet und sie besteht aus Obergurt 2, Untergurt 3 und Beplankung 4 und 5. Im Innen raum des Hohlkörpers der Endscheibe 1 sind Spanten 6 oder Stegbleche angeordnet, die noch näher beschrieben werden.

Die Beplankung 4 ist gleichzeitig die Seite der Endscheibe 1, die als Flügelanschluß dient. Von den Längskanten dieser Beplankung 4 gehen der Obergurt 2 und der Untergurt 3 aus, und zwar jeweils einen spitzen Winkel zwischen Beplankung 4 und Gurten 2, 3 einschließend. Mit anderen Worten, Obergurt 2 und Untergurt 3 sind konvergierend angeordnet, derart, daß der Querschnitt der Endscheibe 1 im wesentlichen einem Trapez entspricht. Als vorteilhaft hat sich ein Winkel von etwa 28 bis 35° erwiesen, den der schräge Untergurt 3 mit der Horizontalen einschließt. Dies ermöglicht auch extrem enge Kurven zu flairen. Bevorzugt ist ein Winkel von etwa 30°.

Ein ebenfalls wesentliches Merkmal der Endscheibe 1 bilden die im Abstand voneinander im Hohlraum des Hohlkörpers vorgesehenen Spanten 6 oder Stegbleche, die die Endscheibe 1 zu einem statischen Verband machen, durch den die Endscheibe 1 eine hohe Festigkeit erhält.

Fig. 5 zeigt in einer Einzeldarstellung einen Spant 6. Seine Kontur entspricht dem Profil der Endscheibe 1.

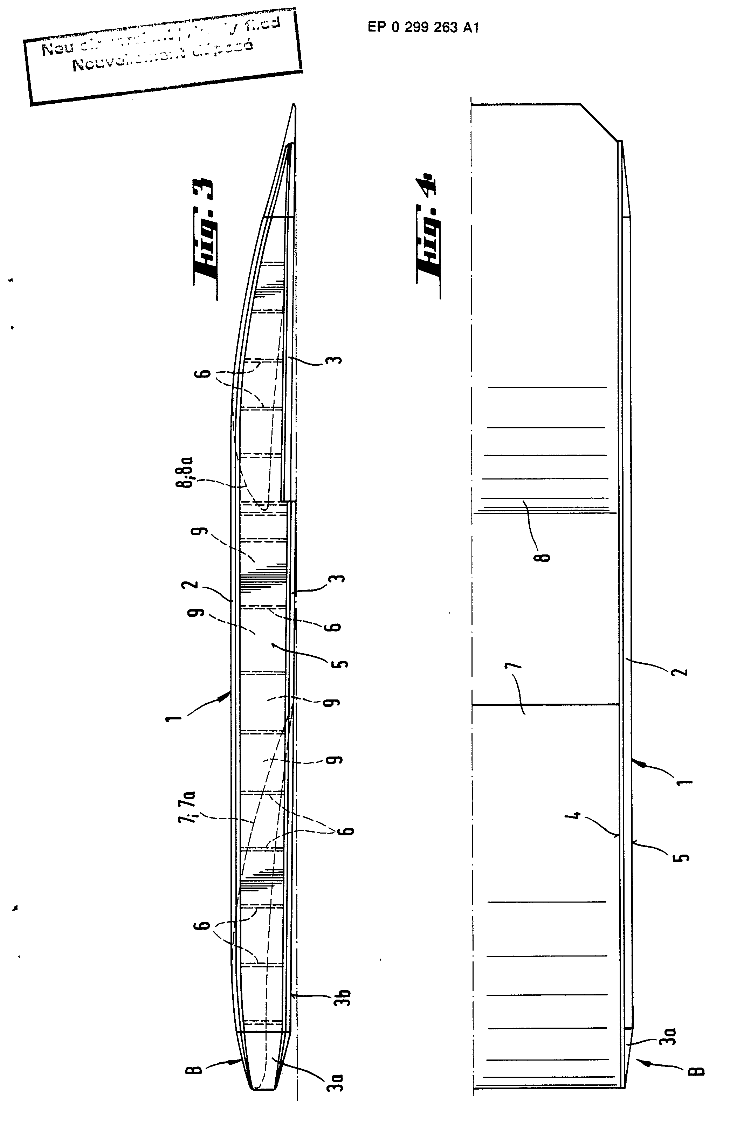

Durch diese Spanten 6 wird der Hohlkörper der Endscheibe 1 in Kammern geteilt, die abgeschottet auch als Treibstoffbehälter dienen können. Einige Bereiche der Endscheibe 1 sind ganz, andere teilweise wasserdicht. In die nur teilweise wasserdichten Bereiche, wie sie beispielsweise in Fig. 3 als Kammern 9 gezeigt sind, können Treibstoff-Sacktanks eingebracht werden, die eine besonders gute Ausnutzung der Restkraftstoffmenge gewährleisten.

Am Bug-Ende B des Stauflügelbootes verläuft die Endscheibe 1 im wesentlichen konisch, wobei der Endbereich 3a des Unter gurts 3 leicht schräg ansteigt. Wie bereits erwähnt werden durch diese Abschrägung sowohl beim Ab- als auch beim Anwassern verbesserte Bedingungen erreicht und in Verbindung mit der nach außen von der Beplankung 4 gerichteten Schräge des Untergurts 3 wird der Übergang von der Luft- in die Wasserführung harmonisiert.

Zweckmäßig wird am Untergurt 3 an der Übergangsstelle zur Beplankung 4 ein schmaler Bereicht 3b verstärkt, um als Gleitschutz zu dienen und Beschädigungen der Unterseite der Beplankung und des Untergurtes 3 bei etwaigem Anlegen an flachen Sandstränden zu verhindern. Dieser Bereich 3b kann beispielsweise als Kufe ausgelegt werden.

Fig. 5 zeigt einen Spant 6, wie er beispielsweise in der Mitte der Endscheibe 1 angeordnet wird. Es ist zur Aufnahme von Sacktanks T ausgelegt, wobei der Bereich 2' teilweise wasserdicht und der Bereich 3' wasserdicht sein kann.

## Ansprüche

1. Endscheibe für ein Stauflügelboot mit an jeder Rumpfseite zwei im Abstand voneinander und hinterienander in etwa gleicher Höhe am Rumpd angeordneten Tragflügeln in Form von Flügelstummeln, die miteinander durch eine an der Außenseite der Flügelstummel befestigte flache Endscheibe verbunden sind,
**dadurch gekennzeichnet,** daß jede Endscheibe (1) als Hohlkörper gestlatet ist, der aus Obergurt (2), Untergurt (3) sowie beidseitiger Beplankung (4, 5) besteht und durch im Innenraum des Hohlraumes im Abstand voneiander angeordneten Spanten (6) versätrkt ist.

2. Endscheibe nach Anspruch 1, dadurch gekennzeichnet, daß der Obergurt (2) und der Untergurt (3) ausgehend von der den Trageflügelsn (7 und 8) zugekehrten Beplankung (4) konvergierend angeordnet sind, derart, daß die Endscheibe (1) einen im wensentlichen trapezförmigen Querschnitt aufweist.

3. Endscheibe nach Anspruch 1 und 2, dadurch gekennzeichnet, daß sie am Bugende (B) des Stauflgüelbootes im wesentlichen konisch gestaltet ist und der zum Konus gehörende Endabschnitt (3a) des Untergurtes (3) schräg ansteigend zur Konusspitze verläuft.

4. Endscheibe nach Anspruch 1, dadurch gekennzeichnet, daß Bereiche ihres von Spanten (6) durchzogenen Innenraumes abgeschottet und teilweise oder ganz wasserdichte Kammern gebildet und diese als Treibstoffbehälter nutzbar sind.

5. Endscheibe nach Anspruch 1 und 2, dadurch gekennzeichnet, daß ein an die den Tragflügeln (7 und 8) zugekehrten Beplankung (4) grenzender schmaler Bereich (3b) des Untergurtes (3) eine Verstärkung aufweist.

6. Endscheibe nach Anspruch 1, 2, 3 und 5, dadurch gekennzeichnet, daß die Schräge des Untergurtes (3) der Endscheibe (1) in einem Winkel von etwa 30° zur Horizontalen verläuft.

**Fig. 5**

**Fig. 1**

**Fig. 2**

**Fig. 3**

B
6
7; 7a
1
9
2
9
8; 8a
6

3a
3b
6
9
9
5
6
3
3

EP 0 299 263 A1

**Fig. 4**

7
8
4
3a
B
5
1
2

## EINSCHLÄGIGE DOKUMENTE

EP 88110202.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A - 2 237 709 (VEREINIGTE FLUGTECHNISCHE WERKE-FOKKER GMBH) <br> * Gesamt * <br><br> -- | 1-3,6 | B 60 V 1/08 <br> B 60 V 1/22 |
| D,Y | DE - A1 - 2 931 020 (SCHELLHAAS) <br> * Gesamt * <br><br> -- | 1-3,6 | |
| A | DE - A1 - 2 606 405 (VEREINIGTE FLUGTECHNISCHE WERKE-FOKKER GMBH) <br> * Fig. 1 * <br><br> -- | 1 | |
| D,A | DE - B2 - 2 303 972 (VEREINIGTE FLUGTECHNISCHE WERKE-FOKKER GMBH) <br> * Fig. 3 * <br><br> -- | 1 | |
| D,A | DE - B - 1 756 013 (VEREINIGTE FLUGTECHNISCHE WERKE-FOKKER GMBH) <br> * Fig. 1,2 * <br><br> ---- | 1 | RECHERCHIERTE SACHGEBIETE (Int. Cl.4) <br><br> B 60 V <br> B 63 B |

Der vorliegende Recherchenbericht wurde für alle Patentansprüche erstellt.

| Recherchenort | Abschlußdatum der Recherche | Prüfer |
|---|---|---|
| WIEN | 14-10-1988 | SCHMICKL |